# EUROPÄISCHE PATENTSCHRIFT

(11) **EP 3 160 881 B1**
(45) Veröffentlichungstag und Bekanntmachung des Hinweises auf die Patenterteilung: **27.07.2022**
(21) Anmeldenummer: 15744858.0
(22) Anmeldetag: 24.06.2015
(51) Int. Cl.: B65G 47/70, B65G 1/137

(54) **VERFAHREN UND FÖRDERTECHNIKELEMENT ZUM BÜNDELN VON FÖRDERSTRÖMEN IN EINER FÖRDERANLAGE**
METHOD AND CONVEYING TECHNOLOGY ELEMENT FOR COMBINING CONVEYOR STREAMS IN A CONVEYOR SYSTEM
PROCÉDÉ ET ÉLÉMENT DE MANUTENTION, DESTINÉS À CONCENTRER DES FLUX DE TRANSPORT DANS UNE INSTALLATION DE TRANSPORT

(30) Priorität: 24.06.2014 AT 504392014
(43) Veröffentlichungstag der Anmeldung: 03.05.2017
(73) Patentinhaber: TGW Logistics Group GmbH, 4614 Marchtrenk (AT)
(72) Erfinder: MESSNER, Gerhard, 4020 Linz (AT)
(74) Vertreter: Burger, Hannes
(86) Internationale Anmeldenummer: PCT/AT2015/050157
(87) Internationale Veröffentlichungsnummer: WO 2015/196226

(56) Entgegenhaltungen:
- EP-A1- 0 765 826
- GB-A- 961 044
- US-A- 3 173 557
- US-A- 3 259 240
- US-A- 5 669 748
- US-A1- 2005 241 910
- US-A1- 2007 129 843
- US-A1- 2011 048 894

## Beschreibung

Die Erfindung betrifft ein Verfahren zum Bündeln von Förderströmen an einem Fördertechnikelement mit mehreren eingehenden Fördersegmenten, zumindest einer Ankopplung an ein abgehendes Fördersegment, auf das die eingehenden Fördersegmente zusammengeführt werden, und mehreren Anhalteeinrichtungen zum Anhalten eines Förderflusses auf den eingehenden Fördersegmenten. Weiterhin betrifft die Erfindung ein Fördertechnikelement zum Bündeln von Förderströmen, das mehrere eingehende Fördersegmente umfasst, zumindest eine Ankopplung für ein abgehendes Fördersegment, auf das die eingehenden Fördersegmente zusammengeführt werden, und mehrere Anhalteeinrichtungen zum Anhalten eines Förderflusses auf den eingehenden Fördersegmenten. Schließlich betrifft die Erfindung auch eine Förderanlage mit mehreren solchen Fördertechnikelementen, wobei zumindest eine Ankopplung für ein abgehendes Fördersegment des einen Fördertechnikelements mit einem eingehenden Fördersegment eines anderen Fördertechnikelements direkt oder indirekt verbunden ist.

Ein Verfahren, ein Fördertechnikelement sowie eine Förderanlage der genannten Art sind grundsätzlich bekannt. Dabei werden mehrere an einem Fördertechnikelement eingehende Förderströme bedarfsweise angehalten und auf einen oder mehrere Ausgangsförderströme weitergeleitet, um Förderobjekte gezielt zu einem oder mehreren Zielen zu leiten. In der Regel verwaltet eine übergeordnete Steuerung eine Reihe von Kommissionieraufträgen und steuert die Elemente der Förderanlage so an, dass die einem Ziel (z.B. einem Kommissionierarbeitsplatz) zugeordneten Förderobjekte aus einem Lager ausgelagert und an das genannte Ziel transportiert werden, insbesondere in einer vorgegebenen Reihenfolge oder Sequenz. Entlang der Förderstrecke sind dazu Sensoren angeordnet, welche die passierenden Förderobjekte registrieren und der übergeordneten Steuerung melden, sodass diese Informationen darüber hat, wo sich welches Förderobjekt gerade befindet und wie die Förderanlage davon ausgehend anzusteuern ist. Insbesondere bei vielen zu versorgenden Zielen und eine großen Vielfalt an zu transportierenden Objekten resultiert eine komplexe steuerungstechnische Aufgabe, welche den Betrieb und insbesondere die Inbetriebnahme einer Förderanlage erschwert.

GB 961 044 A offenbart ein Verfahren zum Bündeln von Förderströmen an einem Fördertechnikelement mit mehreren eingehenden Fördersegmenten, zumindest einer Ankopplung an ein abgehendes Fördersegment, auf das die eingehenden Fördersegmente zusammengeführt werden, und mehreren Anhalteeinrichtungen zum Anhalten eines Förderflusses auf den eingehenden Fördersegmenten.

In einer einfachen Ausführungsform einer solchen Steuerung kann ein Förderobjekt, das eines solchen Sensor passiert, die Freigabe des an einem Fördertechnikelement eingehenden Förderstroms auslösen ("triggern"). Allerdings führt dieses vereinfachte Verfahren nur zu mäßigem Durchsatz durch die Förderanlage und daher nur zu einer geringen Zahl an ausgeführten Aufträgen pro Zeiteinheit.

Eine Aufgabe der Erfindung ist es daher, ein verbessertes Verfahren und ein verbessertes Fördertechnikelement zum Bündeln von Förderströmen anzugeben. Insbesondere soll die Komplexität einer Steuerung für eine Förderanlage reduziert beziehungsweise der Durchsatz durch dieselbe erhöht werden.

Die Aufgabe der Erfindung wird mit einem Verfahren nach Anspruch 1 gelöst.

Die Aufgabe der Erfindung wird auch mit einer Förderanlage nach Anspruch 14 gelöst.

Durch die vorgeschlagenen Maßnahmen wird eine sehr einfache Vorschrift zum Leiten von Förderobjekten verwirklicht, die aber dennoch hohen Durchsatz ermöglicht. Konkret werden mehrere dem genannten Fördertechnikelement stromabwärts nachgelagerte Auslöseeinrichtungen ODER-verknüpft und für die Freigabe einer Anhalteeinrichtung beziehungsweise eines Förderobjekts herangezogen. Das heißt, ein an der Anhalteeinrichtung wartendes Förderobjekt wird dann weitergeleitet, wenn ein anderes erwartetes Förderobjekt eine der ODER-verknüpften Auslöseeinrichtungen passiert oder wenn es gar kein vorangehendes Förderobjekt gibt. Letzteres gilt beispielsweise grundsätzlich für das erste Förderobjekt einer Sortierreihenfolge.

Unter einem "Fördertechnikelement" ist im Rahmen der Erfindung jede Einrichtung zur Förderung und/oder Manipulation von Förderobjekten zu verstehen, welche Förderströme zusammenführt und über ein abgehendes Fördersegment oder mehrerer solcher Segmente weiterführt. Insbesondere kann das genannte Fördertechnikelement auch als Knoten aufgefasst werden, über den Förderströme geführt werden. Konkrete Beispiele für solche Fördertechnikelemente sind alle Arten von Einschleusern, Einmündungen von Nebenförderbahnen in eine Hauptförderbahn, Drehtische, aber auch Roboter zum Auslagern von Förderobjekten aus Lagern wie zum Beispiel Regalbediengeräte und autonome Förderfahrzeuge ("Shuttles") und Vertikalförderer wie Lifte und Paternoster. Alle diese Elemente können Förderströme von mehreren eingehenden Fördersegmenten auf einen Knoten konzentrieren. Im Falle von Liften und Paternoster werden Förderströme aus mehreren Ebenen auf einige wenige Förderströme (auf in der Regel niedrigeren Ebenen) konzentriert. Ein Regalbediengerät kann als Fördertechnikelement aufgefasst werden, das Förderströme von vielen Lagerplätzen auf (in der Regel) einen Ausgangsförderstrom konzentriert.

Die "Fördersegmente" können generell auch als logische Fördersegmente gesehen werden und sind nicht unbedingt rein physisch zu betrachten. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte. Obwohl physisch nur ein einziges Regalbediengerät vorhanden ist, so kann dieses dennoch als logischer Knoten betrachtet werden, welcher v eingehende Fördersegmente und w abgehende Fördersegmente aufweist.

Unter einer "Anhalteeinrichtung" sind im Rahmen der Erfindung alle Element zum Anhalten eines Förderstroms zu verstehen. Beispielsweise fallen darunter Barrieren die in den Förderstrom eingeschoben oder eingeschwenkt werden können. Unter einer Anhalteeinrichtung können aber auch Förderbänder, Förderketten, Förderrollen und dergleichen verstanden werden, die angehalten werden können (also nicht nur lose gelagert sind). Diese Fördermittel dienen in der Regel sowohl zum Fördern als auch zum Anhalten von Förderobjekten.

Im Rahmen der Erfindung ist es sowohl vorstellbar, dass allen eingehenden Fördersegmenten je eine Anhalteeinrichtung zugeordnet ist als auch, dass nur einem Teil der eingehenden Fördersegmente eines Fördertechnikelements je eine Anhalteeinrichtung zugeordnet ist. Insbesondere kann vorgesehen sein, dass allen eingehenden Fördersegmenten bis auf eines je eine Anhalteeinrichtung zugeordnet ist.

Unter einer "Auslöseeinrichtung" sind im Rahmen der Erfindung alle Sensoren und Lesegeräte zu verstehen, die eine Identifikation eines Förderobjekts ermöglichen. Beispielsweise sind dies Barcode-Lesegeräte, RFID-Lesegeräte (Radio Frequency Identification) sowie Videokameras. Aber auch Sensoren zur Messung einer physikalischen Eigenschaft eines Förderobjekts, wie zum Beispiel für Länge, Gewicht Farbe und dergleichen, können grundsätzlich als Auslöseeinrichtung dienen, insbesondere wenn mehrere physikalische Eigenschaften gemessen werden, welche zur Identifikation eines Förderobjekt geeignet sind. Zum Beispiel kann dies die Kombination eines bestimmten Wertebereichs einer Objektlänge, eines bestimmten Wertebereichs einer Objektgewichts und eines bestimmten Wertebereichs einer Objektfarbe sein.

Der Begriff "ODER-Verknüpfung" ist im Hinblick auf die Erfindung weit zu fassen und weder auf physische ODER-Gatter noch auf die konkrete Verwendung von ODER-Programmierbefehlen eingeschränkt. Vielmehr fallen auch jene Implementierungen unter diesen Begriff, die eine Wirkung entsprechend einer ODER-Verknüpfung erzielen, auch wenn diese ohne Verwendung von physischen ODER-Gattern beziehungsweise ODER-Programmierbefehlen erreicht wird.

Unschärfe in der Reihenfolge kann zugunsten eines hohen Durchsatzes bewusst zugelassen werden. Beispielsweise kann ein Förderobjekt n freigegeben werden, wenn eines der vorangehenden Förderobjekte n-1, n-2, n-3 oder ein noch weiter vorangehendes Förderobjekt eine der ODER-verknüpften Auslöseeinrichtungen passiert. Dadurch ist zwar eine Vertauschung innerhalb der gebildeten Ist-Reihenfolge und damit einhergehend eine Abweichung von der Soll-Reihenfolge möglich, allerdings sinkt damit auch die Wahrscheinlichkeit für Blockaden in der Förderanlage, und es steigt der Durchsatz. Gegebenenfalls können die Förderobjekte vor Erreichen des Ziels noch eine Sortierstufe durchlaufen, um eine exakte Ist-Reihenfolge zu erreichen. Durch die Vorsortierung kann diese Sortierstufe jedoch klein gehalten werden und benötigt daher nur wenig Bauraum.

"Stromabwärts" bezeichnet im Rahmen der Erfindung generell Orte, welche einem Bezugspunkt in Förderrichtung der Förderobjekte nachfolgen. Ein Förderobjekt erreicht bei seiner Förderung also zeitlich zuerst den genannten Bezugspunkt und danach stromabwärts gelegene Orte beziehungsweise Positionen.

"Stromaufwärts" ist das Gegenteil von "stromabwärts". Ein Förderobjekt erreicht bei seiner Förderung also zeitlich zuerst stromaufwärts gelegene Orte beziehungsweise Positionen und danach den genannten Bezugspunkt.

Die "Förderrichtung" bezeichnet jene Richtung, in der sich die Förderobjekte auf der Förderanlage (im Normalbetrieb) bewegen.

Ein bewegtes Förderobjekt (und insbesondere mehrere bewegte Förderobjekte) bildet/bilden einen "Förderfluss" oder "Förderstrom".

Vorteilhafte Ausgestaltungen und Weiterbildungen der Erfindung ergeben sich im Folgenden aus den Unteransprüchen sowie aus der Beschreibung in Zusammenschau mit den Figuren.

Günstig ist es, wenn die Anhalteeinrichtung beziehungsweise das an dieser wartende Förderobjekt freigegeben wird, wenn ein dem genannten Förderobjekt in einer Sortierreihenfolge unmittelbar vorangehendes Förderobjekt eine der verknüpften Auslöseeinrichtungen passiert.

Damit ist es möglich, eine genaue Ist-Sortierreihenfolge zu bilden, da ein Förderobjekt n nur dann freigegeben wird, wenn das unmittelbar beziehungsweise direkt vorangehende Förderobjekt n-1 eine der ODER-verknüpften Auslöseeinrichtung passiert.

Günstig ist es auch, wenn eine Anhalteeinrichtung beziehungsweise ein an dieser wartendes Förderobjekt freigegeben wird, wenn alle dem wartenden Förderobjekt in einer Sortierreihenfolge vorangehenden Förderobjekte eine der verknüpften Auslöseeinrichtungen passiert haben. Damit ist es noch besser möglich, eine genaue Ist-Sortierreihenfolge zu bilden. Eine zusätzliche Sortierung ist dann nicht mehr nötig. Beispielsweise kann am Fördertechnikelement eine Liste geführt werden, in der alle Förderobjekte aufgelistet sind, die zu vorgegebenen Zielen gefördert werden sollen. Jene Förderobjekte, die eine der ODER-verknüpften Auslöseeinrichtungen passiert haben, werden in der Liste entsprechend markiert. Beispielsweise kann dazu ein Flag gesetzt werden. Auf diese Weise kann geprüft werden, ob eine Anhalteeinrichtung freizugeben ist oder nicht.

Generell können innerhalb einer Förderanlage auch Fördertechnikelemente mit unterschiedlicher Freigabestrategie verwendet werden. Beispielsweise können gleichzeitig Fördertechnikelemente verwendet werden, welche ein Förderobjekt n freigegeben, wenn eines der vorangehenden Förderobjekte n-1 oder n-2 die Auslöseeinrichtungen passiert, wenn das Förderobjekt n-1 die Auslöseeinrichtungen passiert oder wenn alle vorangehenden Förderobjekte die Auslöseeinrichtungen passiert haben. Auf diese Weise können neuralgische Punkte einer Förderanlage dahingehend entschärft werden, als dort die Sortierkriterien hinsichtlich eines verbesserten Durchsatzes gelockert werden. Gegebenenfalls können die Vorgaben zur Freigabe eines Förderobjekts im Betrieb auch dynamisch angepasst werden, beispielsweise von einer übergeordneten Steuerung.

Besonders günstig ist es, wenn auch das Signal einer direkt in einem abgehenden Fördersegment angeordneten Auslöseeinrichtung für die Freigabe der Anhalteeinrichtung beziehungsweise des an dieser wartenden Förderobjekts herangezogen wird. Auf diese Weise wird ein Förderobjekt schnellst möglich über das Fördertechnikelement geleitet. Dadurch wird der Durchsatz auf der Förderanlage insgesamt weiter erhöht.

In einer weiteren vorteilhaften Variante des Verfahrens weisen mehrere Förderobjekte die gleiche Ordnungsnummer in der Sortierreihenfolge auf. Auf diese Weise ist es möglich, mehrere in einer Sortierreihenfolge angeordnete Gruppen von Förderobjekten zu bilden, innerhalb derer die Förderobjekte jedoch ungeordnet angeordnet sein können. Das heißt, die Förderobjekte haben eine nicht notwendigerweise eindeutige Ordnungsnummer. Beispielsweise kann die Sortierreihenfolge mehrere Förderobjekte mit der Ordnungsnummer 3 aufweisen. Diese Förderobjekte werden durch das vorgestellte Verfahren nach der Gruppe 2 aber vor der Gruppe 4 angeordnet. Innerhalb der Gruppe 3 ist die Anordnung der Förderobjekte jedoch beliebig.

Erfindungsgemäß wird zum Bilden einer Sortierreihenfolge für ein zu versorgendes Ziel oder mehrerer solcher Reihenfolgen für mehrere zu versorgende Ziele in einer Förderanlage mit mehreren Fördertechnikelementen der genannten Art die zumindest eine Ankopplung für ein abgehendes Fördersegment des einen Fördertechnikelements mit einem eingehenden Fördersegment eines anderen Fördertechnikelements direkt oder indirekt verbunden, und es werden mehrere der mit einer ODER-Verknüpfung logisch verknüpften Auslöseeinrichtungen jeweils einem anderen stromabwärts gelegenen Fördertechnikelement der genannten Art nachgelagert. Auf diese Weise werden mehrere Auslöseeinrichtungen nach verschiedenen Knoten mehrerer vernetzter beziehungsweise verketteter Fördertechnikelemente für die Freigabe eines Förderobjekts herangezogen. Dadurch kann der Durchsatz auf der Förderanlage noch weiter erhöht werden. "Direkt" bedeutet in obigem Zusammenhang, dass die Ankopplung für ein abgehendes Fördersegment des einen Fördertechnikelements ohne Zwischenschaltung anderer Elemente mit einem eingehenden Fördersegment eines anderen Fördertechnikelements verbunden ist, "indirekt" das Gegenteil. Insbesondere sind unter den anderen zwischengeschalteten Elementen Manipulatoren zu verstehen, welche den Förderstrom aufteilen oder auffächern, also zum Beispiel Abzweiger und dergleichen.

Besonders vorteilhaft ist es, wenn die den Fördertechnikelementen zugeordneten Verfahrensschritte im Hinblick auf die Steuerung der Anhalteeinrichtungen - bis auf die Meldung eines eine Auslöseeinrichtung passierenden Förderobjekts - je Fördertechnikelement unabhängig von den Verfahrensschritten der übrigen Fördertechnikelemente ausgeführt werden. Dadurch kann die Kommunikation und damit der Aufwand für Kommunikationsleitungen zwischen Fördertechnikelementen gering gehalten werden.

Besonders vorteilhaft ist es auch, wenn eine Programmlogik im Hinblick auf die Steuerung der Anhalteeinrichtungen in allen Fördertechnikelementen identisch aufgebaut ist, beziehungsweise wenn die Verfahrensschritte im Hinblick auf die Steuerung der Anhalteeinrichtungen in allen Fördertechnikelementen in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Günstig ist darüber hinaus auch ein Verfahren zum Betrieb einer Förderanlage der genannten Art mit einem vorgelagerten Lager mit Lagerplätzen für Förderobjekte, wobei das Fördertechnikelement als Auslagerungsroboter für das Lager ausgebildet ist. Wie bereits erwähnt können solche Roboter, welche zum Beispiel als Regalbediengerät, autonomes Förderfahrzeuge ("Shuttle"), Lift oder Paternoster ausgebildet sind, Förderströme von mehreren eingehenden Fördersegmenten auf einen Knoten konzentrieren. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte.

Vorteilhaft ist auch ein Verfahren zum Betrieb einer Förderanlage der genannten Art mit einem vorgelagerten Lager mit Lagerplätzen für Förderobjekten, bei dem Förderobjekte im Hinblick auf die Ziele und in Bezug auf eine Sortierreihenfolge für ein zu versorgendes Ziel geordnet ausgelagert werden. Das bedeutet, dass zuerst Förderobjekte für das Ziel mit der niedrigsten Position in einer Reihenfolge ausgelagert werden, dann die Förderobjekte mit der zweitniedrigsten Position usw. Zudem werden die Förderobjekte für ein bestimmtes Ziel ebenfalls geordnet ausgelagert. Befinden sich in dem Lager, aus dem mit Hilfe eines Fördertechnikelements ausgelagert wird, zum Beispiel die Förderobjekte 3 und 5 des Ziels A und die Förderobjekte 1 und 7 des Ziels B, so werden die Förderobjekte in der Reihenfolge A3, A5, B1, B7 ausgelagert. Bei diesem Beispiel wird angenommen, dass sich die in der Reihenfolge fehlenden Förderobjekte (also z.B. A1, A2, A4, B2, B3, usw.) in anderen Lagern befinden, die von anderen Fördertechnikelementen ausgelagert werden. Auf diese Weise kann insgesamt ein hoher Ordnungsgrad des auf der Fördertechnik vorhandenen Förderströme erzielt werden. Vorteilhaft ist es aber auch, wenn Förderobjekte in Bezug auf eine Sortierreihenfolge für ein zu versorgendes Ziel geordnet, im Hinblick auf die Ziele jedoch chaotisch beziehungsweise nicht notwendigerweise geordnet aus dem Lager ausgelagert werden. Bezogen auf das zuvor genannten Beispiel bedeutet dies, dass die Förderobjekte beispielsweise auch in der Reihenfolge B1, A3, A5, B7 oder beispielsweise auch in der Reihenfolge B1 A3, B7, A5 ausgelagert werden können. Durch die ungeordnete Auslagerung auf Zielebene kann der Durchsatz bei der Auslagerung erhöht werden, beispielsweise wenn bei der Auslagerung Transportwege minimiert werden.

Günstig ist es weiterhin, wenn wenigstens zwei Fördertechnikelemente direkt oder indirekt ringförmig miteinander verbunden sind, beziehungsweise wenn wenigstens ein Teilförderstrom ringförmig über die genannten Fördertechnikelemente geführt wird. Mit anderen Worten wird in dem Netz verbundener Fördertechnikelemente eine Rückkopplung vorgesehen. Dazu wird wenigstens ein abgehendes Fördersegment wenigstens eines Fördertechnikelements mit wenigstens einem eingehenden Fördersegment wenigstens eines anderen, stromaufwärts angeordneten Fördertechnikelements verbunden. Auf diese Weise kann der Ordnungsgrad der transportierten Förderobjekte in mehreren Durchläufen erhöht werden, beziehungsweise können Lücken in der Reihenfolge schrittweise aufgefüllt werden.

An dieser Stelle wird angemerkt, dass die Begriffe "stromabwärts" und "stromaufwärts" in Bezug auf einen ringförmigen Teilstrom synonymisch gebraucht werden können. Jedoch umfassen die in einem Fördertechnikelement zur Freigabe einer Anhalteeinrichtung ODER-verknüpften Auslöseeinrichtungen nicht zwangsläufig nur im Ring angeordnete Auslöseeinrichtungen, sondern können auch außerhalb des Rings angeordnete und somit eindeutig stromabwärts gelegene Auslöseeinrichtungen umfassen.

Günstig ist es darüber hinaus, wenn der Förderstrom nach der Ankopplung für das abgehende Fördersegment wieder aufgefächert wird. Auf diese Weise kann der abgehende Förderstrom in verschiedenen Bereiche einer Förderanlage beziehungsweise zu verschiedenen Zielen geleitet werden. Denkbar ist auch, dass der abgehende Förderstrom auf mehrere eingehende Fördersegmente stromaufwärts angeordneter Fördertechnikelemente rückgekoppelt wird. Beispielsweise können die Förderobjekte in einer vorgegebenen Sequenz oder auch chaotisch auf mehrere eingehende Fördersegmente stromaufwärts angeordneter Fördertechnikelemente rückgekoppelt werden, um so nach und nach den Ordnungsgrad innerhalb des Förderstroms zu erhöhen beziehungsweise auch um Lücken in der Reihenfolge aufzufüllen.

In einer weiteren vorteilhaften Variante des Verfahrens werden die Freigaben pro Zeiteinheit von einer übergeordneten Steuerung überwacht, und es wird jene Anhalteeinrichtung freigegeben, an welcher das Förderobjekt mit der niedrigsten Ordnungsnummer wartet, wenn für die Freigaben pro Zeiteinheit ein Schwellwert unterschritten wird. Dadurch wird vermieden, dass es auf der Förderanlage durch eine ungünstige Anordnung der Förderobjekte zu längerfristigen Blockade kommt. Anstelle das Förderobjekt mit der niedrigsten Ordnungsnummer freizugeben, kann eine Freigabe beispielsweise auch chaotisch beziehungsweise zufällig erfolgen. Vorteilhaft wird diese Variante des Verfahrens mit einer ringförmigen Rückkopplung im Förderstrom kombiniert, um den Ordnungsgrad der auf der Förderanlage transportierten Förderobjekte sukzessive zu erhöhen. Vorteilhaft ist es auch, wenn der Schwellwert entsprechend der Anzahl der auf der Förderanlage befindlichen Objekte adaptiert wird. Das heißt, dass der Schwellwert erhöht wird, wenn die Anzahl der transportierten Objekte steigt und umgekehrt. Damit wird vermieden, dass eine sinkende Anzahl von Freigaben, welche durch eine geringe Anzahl an transportierten Förderobjekten begründet ist, als Blockade fehlinterpretiert wird. Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte auf der Förderanlage weil sie eben zur Mehrzahl noch im Lager oder bereits in Versandbehälter verladen sind. Vorteilhaft ist es auch, wenn ein Pausieren der Entnahme der Förderobjekte an einem Ziel berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

An dieser Stelle wird angemerkt, dass sich die zum erfindungsgemäßen Verfahren offenbarten Varianten und die daraus resultierenden Vorteile sinngemäß auf das erfindungsgemäße Fördertechnikelement respektive die erfindungsgemäße Förderanlage beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel eines Fördertechnikelements;
- Fig. 2: wie Fig. 1, jedoch mit je einer ODER-Verknüpfung je Anhalteeinrichtung;
- Fig. 3: ein weiteres Beispiel eines Fördertechnikelements mit einer Steuerung mit erweitertem Funktionsumfang;
- Fig. 4: ein Beispiel für eine Tabelle, in der die Objekte verzeichnet sind, welche eine Auslöseeinrichtung passiert haben;
- Fig. 5: die Tabelle aus Fig. 4 zu einem zweiten Zeitpunkt;
- Fig. 6: die Tabelle aus Fig. 4 zu einem dritten Zeitpunkt;
- Fig. 7: ein schematisch dargestelltes Lager und Regalbediengerät in Schrägansicht;
- Fig. 8: das Lager aus Fig. 7 in Vorderansicht;
- Fig. 9: eine logische Repräsentation des Regalbediengeräts aus Fig. 7;
- Fig. 10: eine etwas abgewandelte Form eines Regalbediengeräts;
- Fig. 11: ein Lager mit einem daran angeschlossenen Lift und mit darin autonom fahrenden Förderfahrzeugen;
- Fig. 12: eine logische Repräsentation der Anordnung aus Fig. 11;
- Fig. 13: wie Fig. 11, nur mit einem Paternoster anstelle des Lifts;
- Fig. 14: eine logische Repräsentation der Anordnung aus Fig. 13 und
- Fig. 15: ein Beispiel einer etwas komplexeren Förderanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

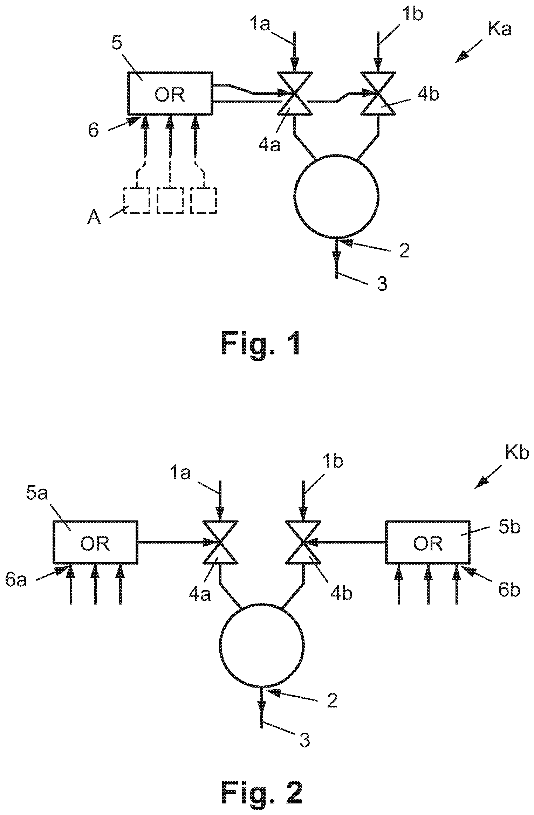

Fig. 1 zeigt ein erstes Beispiel eines Fördertechnikelements Ka zum Bündeln von Förderströmen. Das Fördertechnikelement Ka umfasst zwei eingehende Fördersegmente 1a, 1b, eine Ankopplung 2 für ein abgehendes Fördersegment 3, auf das die eingehenden Fördersegmente 1a, 1b zusammengeführt werden, und mehrere Anhalteeinrichtungen 4a, 4b zum Anhalten eines Förderflusses auf den eingehenden Fördersegmenten 1a, 1b. Wegen der genannten Zusammenführung kann das Fördertechnikelement Ka auch als Knoten aufgefasst werden. Zudem umfasst das Fördertechnikelement Ka eine Steuerung 5 welche mehrere mit einer ODER-Verknüpfung logisch verknüpfte Eingänge 6 aufweist und welche ausgangsseitig mit den genannten Anhalteeinrichtungen 4a, 4b verbunden ist. Eingangsseitig ist die Steuerung 5 mit mehreren (hier drei) zu den genannten eingehenden Fördersegmenten 1a, 1b stromabwärts gelegenen Auslöseeinrichtungen A verbindbar beziehungsweise verbunden. Diese sind in der Fig. 1 lediglich strichliert dargestellt, da sich diese in der Regel an einer (in der Fig. 1 nicht dargestellten) Förderanlage befinden. Die Steuerung 5 ist dazu eingerichtet, eine Anhalteeinrichtung 4a, 4b beziehungsweise ein an dieser wartendes Förderobjekt freizugeben, wenn ein dem genannten Förderobjekt in einer Sortierreihenfolge vorangehendes Förderobjekt eine der genannten Auslöseeinrichtung A passiert oder es kein vorangehendes Förderobjekt gibt.

In dem in Fig. 1 dargestellten Beispiel sind lediglich zwei eingehende Fördersegmente 1a, 1b vorgesehen. Denkbar ist natürlich auch, dass mehr als zwei eingehende Fördersegmente 1a, 1b vorgesehen sind. Desgleichen ist es vorstellbar, dass abweichend von der Darstellung der Fig. 1 mehr als eine Ankopplung 2 und mehr als ein abgehendes Fördersegment 3 vorgesehen sind. Denkbar ist auch eine von drei abweichende Anzahl an Eingängen 6 beziehungsweise Auslöseeinrichtungen A.

An dieser Stelle wird auch angemerkt, dass es sich bei der Fig. 1 um eine rein symbolhafte Darstellung des Fördertechnikelements Ka handelt. Beispielsweise sind die Anhalteeinrichtungen 4a, 4b als Ventile dargestellt. Selbstverständlich ist dies nicht einschränkend zu verstehen, sondern als Anhalteeinrichtung 4a, 4b können alle Elemente zum Anhalten eines Förderstroms eingesetzt werden. Beispielsweise können darunter Barrieren oder Schranken verstanden werden, die in den Förderstrom eingeschoben oder eingeschwenkt werden können. Unter einer Anhalteeinrichtung 4a, 4b können aber auch Förderbänder, Förderketten, Förderrollen und dergleichen verstanden werden, die angehalten werden können. Da diese Fördermittel in der Regel sowohl zum Fördern als auch zum Anhalten von Förderobjekten dienen, ist in diesem Fall eine scharfe Abgrenzung zwischen den Anhalteeinrichtungen 4a, 4b und den eingehenden Fördersegmenten 1a, 1b nur schwer oder nicht möglich. Das eingehende Fördersegment 1a, 1b erfüllt daher in diesem Fall eine Doppelfunktion.

Vorstellbar ist es auch, dass - abweichend von der Darstellung in der Fig. 1 - nicht allen eingehenden Fördersegmenten 1a, 1b je eine Anhalteeinrichtung 4a, 4b zugeordnet ist. Beispielsweise kann die Anhalteeinrichtung 4b entfallen, sodass ein auf dem Fördersegment 1b eingehendes Förderobjekt immer beziehungsweise priorisiert weitergeleitet wird.

Schließlich wird auch angemerkt, dass die ODER-Verknüpfung nicht notwendigerweise als dezidiertes Logik-Gatter ausgeführt sein muss, sondern beispielsweise auch in Form eines Software-Algorithmus ausgebildet sein kann, der in einem Prozessor ausgeführt wird.

Fig. 2 zeigt nun ein weiteres Ausführungsbeispiel eines Fördertechnikelements Kb, das dem in Fig. 1 dargestellten Fördertechnikelement Ka sehr ähnlich ist. Im Unterschied dazu ist aber jeder Anhalteeinrichtung 4a, 4b eine eigene ODER-Verknüpfung zugeordnet. Auf diese Weise ist es prinzipiell möglich, die Ansteuerung der Anhalteeinrichtungen 4a, 4b durch zwei parallel (und unter Umständen auch voneinander unabhängig) laufender Algorithmen zu verwirklichen. Denkbar wäre auch, unterschiedliche Auslöseeinrichtungen A für die Ansteuerung der Anhalteeinrichtungen 4a, 4b heranzuziehen.

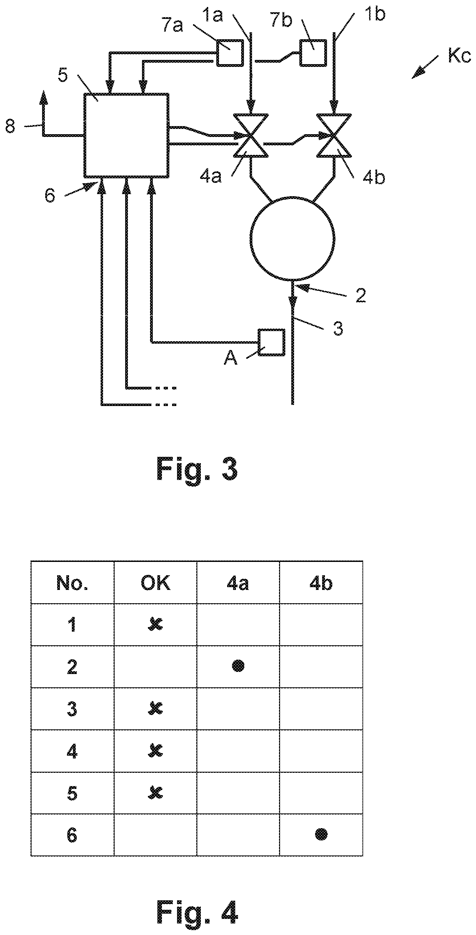

Fig. 3 zeigt ein weiteres Beispiel für ein Fördertechnikelement Kc, das insbesondere verdeutlichen soll, dass die Steuerung 5 nicht auf die ODER-Verknüpfung beschränkt ist, sondern auch andere Aufgaben übernehmen kann. In der Fig. 3 ist die Steuerung 5 dazu mit Sensoren und/oder Leseeinrichtungen 7a, 7b verbunden, mit deren Hilfe die an den Fördersegmenten 1a, 1b eingehenden Förderobjekte identifiziert und deren Rang beziehungsweise Position in einer Sortierreihenfolge bestimmt werden kann. Darüber hinaus ist mit der Ausgangsleitung 8 angedeutet, dass die genannte Erfassung eines eingehenden Förderobjekts auch an stromaufwärts liegende Fördertechnikelemente Kc beziehungsweise auch an eine übergeordnete Steuerung gemeldet werden kann. Das heißt, eine Leseeinrichtungen 7a, 7b kann auch als Auslöseeinrichtung A für stromaufwärts liegende Fördertechnikelemente Kc fungieren.

Die Figuren 4 bis 6 sollen nun an einem einfachen Beispiel verdeutlichen, wie die Freigabe einer Anhalteeinrichtung 4a, 4b respektive eines wartenden Förderobjekts erfolgen kann. Zu diesem Zweck wird im Fördertechnikelement Ka..Kc eine Liste geführt, in der alle Förderobjekte aufgelistet sind, die zu vorgegebenen Zielen gefördert werden sollen. Der Einfachheit halber wird von einer Sortierreihenfolge von sechs Förderobjekten ausgegangen, die in aufsteigender Reihenfolge an einem (einzigen) Ziel ankommen sollen.

Gemäß des im Fördertechnikelement Ka..Kc ablaufenden Algorithmus soll in diesem Beispiel eine Anhalteeinrichtung 4a, 4b beziehungsweise das an dieser wartende Förderobjekt freigegeben werden, wenn ein dem genannten Förderobjekt in einer Sortierreihenfolge unmittelbar vorangehendes Förderobjekt eine der verknüpften Auslöseeinrichtungen A passiert. Das heißt, dass ein Förderobjekt n nur dann freigegeben wird, wenn das unmittelbar beziehungsweise direkt vorangehende Förderobjekt n-1 eine der ODER-verknüpften Auslöseeinrichtung A passiert, wodurch es im Grunde möglich ist, eine genaue Ist-Sortierreihenfolge am Ziel zu bilden.

In Fig. 4 ist ein erster Zeitpunkt beziehungsweise Zustand dargestellt, zu oder in dem an der ersten Anhalteeinrichtung 4a das Förderobjekt Nummer 2 und an der zweiten Anhalteeinrichtung 4b das Förderobjekt Nummer 6 wartet. Keines der anderen Förderobjekte Nummer 1, 3, 4 oder 5 hat bisher eine der ODER-verknüpften Auslöseeinrichtungen A passiert. Diese sind in der Tabelle daher mit einem "x" markiert.

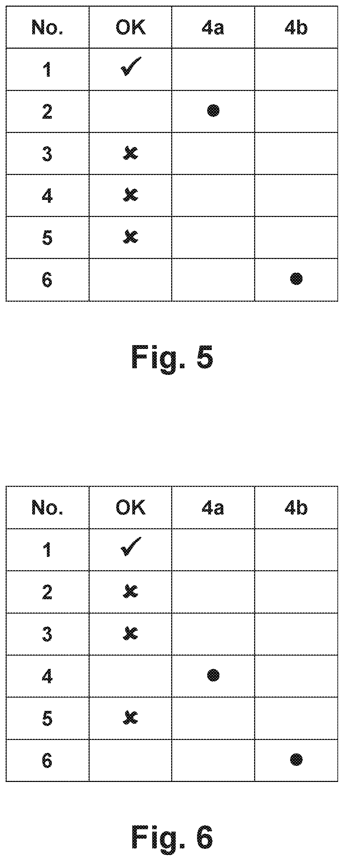

Zu einem zweiten Zeitpunkt, der in Fig. 5 dargestellt ist, hat das Förderobjekt Nummer 1 eine der ODER-verknüpften Auslöseeinrichtungen A passiert und ist in der Tabelle mit einem Häkchen markiert Daher wird das direkt nachfolgende Förderobjekt Nummer 2, das an der Anhalteeinrichtung 4a wartet, freigegeben.

In der Fig. 6 ist dementsprechend ein weiterer Zeitpunkt dargestellt, in dem das Förderobjekt Nummer 2 den Bereich des Fördertechnikelements Ka..Kc verlassen hat und das Förderobjekt Nummer 4 nachgerückt ist. Das Fördertechnikelement Nummer 2 wird demgemäß in der Liste als an den stromabwärts liegenden Auslöseeinrichtungen A als erwartet, das heißt mit einem "x", markiert. Selbstverständlich kann dieses auch von Anfang an in der Liste mit einem "x" markiert sein.

Eine weitere Freigabe würde in dem gezeigten Beispiel durch das Förderobjekt Nummer 3 (nämlich für das Förderobjekt Nummer 4) oder durch das Förderobjekt Nummer 5 (nämlich für das Förderobjekt Nummer 6) erfolgen.

Wie aus den Figuren 4 bis 6 ersichtlich ist, wird ein Verfahren zum Bündeln von Förderströmen an einem Fördertechnikelement Ka..Kc durchgeführt, bei dem mehrere zu den eingehenden Fördersegmenten 1a, 1b stromabwärts gelegene und mit einer ODER-Verknüpfung logisch verknüpfte Auslöseeinrichtungen A für die Freigabe einer Anhalteeinrichtung 4a, 4b beziehungsweise eines Förderobjekts herangezogen werden, wobei eine Anhalteeinrichtung 4a, 4b beziehungsweise ein an dieser wartendes Förderobjekt freigegeben wird, wenn ein dem wartenden Förderobjekt in einer Sortierreihenfolge vorangehendes Förderobjekt eine der verknüpften Auslöseeinrichtungen A passiert oder es kein vorangehendes Förderobjekt gibt. Letzteres würde beispielsweise für das Förderobjekt Nummer 1 gelten. Durch die vorgeschlagenen Maßnahmen wird eine sehr einfache Vorschrift zum Leiten von Förderobjekten verwirklicht, die aber dennoch hohen Durchsatz ermöglicht.

In dem oben ausgeführten Beispiel wird ein Förderobjekt n nur dann freigegeben, wenn das unmittelbar vorangehende Förderobjekt n-1 eine der ODER-verknüpften Auslöseeinrichtungen A passiert. Dies ist aber keineswegs die einzig vorstellbare Möglichkeit. Denkbar ist vielmehr auch, dass in der Sortierreihenfolge eine gewisse Unschärfe zugunsten eines hohen Durchsatzes bewusst zugelassen wird. Beispielsweise kann ein Förderobjekt n freigegeben werden, wenn eines der vorangehenden Förderobjekte n-1, n-2, n-3 oder ein noch weiter vorangehendes Förderobjekt eine der ODER-verknüpften Auslöseeinrichtungen A passiert. Beispielsweise kann erlaubt sein, dass das Förderobjekt Nummer 6 auch durch die Förderobjekte Nummer 3 und 4 freigegeben wird. Dadurch ist zwar eine Vertauschung innerhalb der gebildeten Ist-Reihenfolge und damit einhergehend eine Abweichung von der Soll-Reihenfolge möglich, allerdings sinkt damit auch die Wahrscheinlichkeit für Blockaden in einer Förderanlage und es steigt der Durchsatz.

Denkbar ist auch, dass eine Anhalteeinrichtung 4a, 4b beziehungsweise ein an dieser wartendes Förderobjekt dann freigegeben wird, wenn alle dem wartenden Förderobjekt in einer Sortierreihenfolge vorangehenden Förderobjekte eine der verknüpften Auslöseeinrichtungen A passiert haben. Damit ist es noch besser möglich, eine genaue Ist-Sortierreihenfolge zu bilden. Eine zusätzliche Sortierung ist dann nicht mehr nötig. In obigem Beispiel bedeutet dies, dass das Förderobjekt Nummer 6 erst dann freigegeben wird, wenn alle anderen Förderobjekte Nummer 1 bis 5 eine der ODER-verknüpften Auslöseeinrichtungen A passiert haben.

Eine weitere Maßnahme zur Erhöhung des Durchsatzes ist auch das Heranziehen des Signals einer direkt in einem abgehenden Fördersegment 3 angeordneten Auslöseeinrichtung A für die Freigabe der Anhalteeinrichtung 4a, 4b so wie dies in dem in Fig. 3 dargestellten Beispiel gezeigt ist. Würden an den Anhalteeinrichtungen 4a, 4b die Förderobjekte Nummer 3 und 5 warten, dann würde die Freigabe des Förderobjekts Nummer 2 unmittelbar die Freigabe des Förderobjekts Nummer 3 nach sich ziehen. Auf diese Weise wird ein Förderobjekt schnellst möglich über das Fördertechnikelement geleitet und der Durchsatz auf der Förderanlage erhöht.

Abweichend von dem in den Figuren 4 bis 6 gezeigten Beispiel ist es auch möglich, dass mehrere Förderobjekte die gleiche Ordnungsnummer in der Sortierreihenfolge aufweisen. Das heißt, es wäre möglich, dass es mehrere Förderobjekte mit der Nummer 3 gibt. Auf diese Weise ist es möglich, mehrere in einer Sortierreihenfolge angeordnete Gruppen von Förderobjekten zu bilden, innerhalb derer die Förderobjekte jedoch ungeordnet angeordnet sein können. Die Förderobjekte Nummer 3 werden durch das vorgestellte Verfahren nach dem Förderobjekt Nummer 2 aber vor dem Förderobjekt Nummer 4 angeordnet. Die konkrete Reihung der Förderobjekte Nummer 3 ist jedoch unbestimmt. Eine solche Vorgangsweise ist zum Beispiel sinnvoll, wenn die Förderobjekte Nummer 3 artgleich sind (z.B. drei idente Getränkeflaschen). Diese Lockerung der Sortierung, die das Endergebnis jedoch nicht beeinträchtigt, kann dazu beitragen, das Risiko für Blockaden auf einer Förderanlage zu verringern und den Durchsatz zu erhöhen.

Generell kann unter einem "Fördertechnikelement" jede Einrichtung zur Förderung und/oder Manipulation von Förderobjekten verstanden werden, welche Förderströme zusammenführt und über ein abgehendes Fördersegment oder mehrere solche Segmente weiterführt. Für beispielsweise Einschleuser, Einmündungen von Nebenförderbahnen in eine Hauptförderbahn, Drehtische leuchtet dies basierend auf den Figuren 1 bis 3 unmittelbar ein. Fördertechnikelemente, welche Förderströme zusammenführen, können aber beispielsweise auch durch Roboter zum Auslagern von Förderobjekten aus einem Lager gebildet sein.

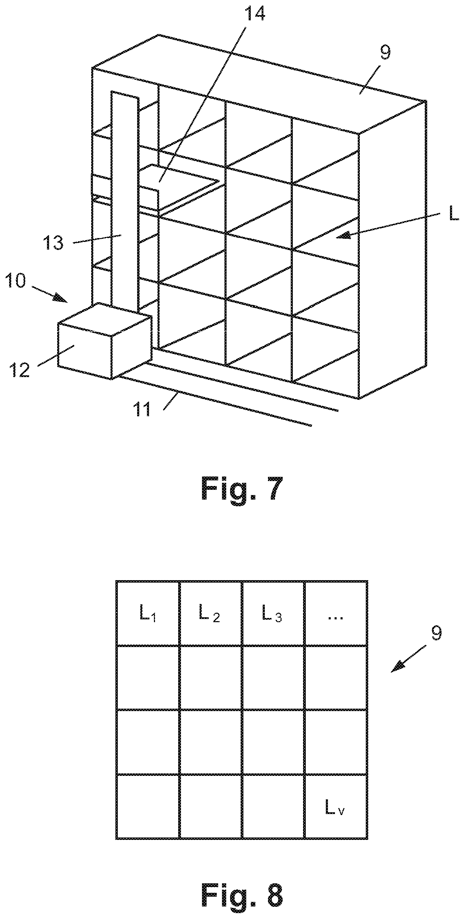

Fig. 7 zeigt dazu eine beispielhafte Anordnung mit einem Lager 9 mit mehreren Lagerplätzen L und einem Regalbediengerät 10, das einen auf Schienen 11 laufenden Wagen 12 mit einer auf einem Masten 13 vertikal verfahrbaren Hubplattform 14 aufweist. Die Funktion eines Regalbediengeräts 10 ist an sich bekannt und braucht an dieser Stelle daher nicht im Detail erläutert werden.

Fig. 8 zeigt eine schematische Frontansicht des Lagers 9, aus welcher eine mögliche Nummerierung der Lagerplätze Ll..Lv hervorgeht.

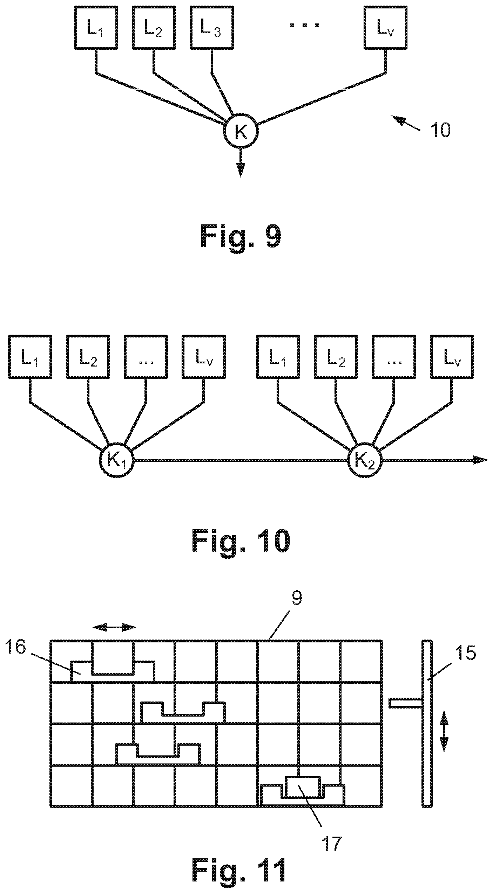

Fig. 9 zeigt nun eine logische beziehungsweise symbolhafte Repräsentation des in der Fig. 7 dargestellten Regalbediengeräts 10. Aus der Fig. 9 ist ersichtlich, dass eine der Anzahl v der Lagerplätzte Ll..Lv entsprechende Anzahl an eingehenden Fördersegmenten 2 auf ein abgehendes Fördersegment 3 konzentriert wird. Die Konzentration des Förderstroms wird dabei durch die Hubplattform 14 gebildet, die in diesem Beispiel jeweils nur ein Förderobjekt aufnehmen kann. Das Regalbediengerät 10 kann demzufolge als v-zu-1-Multiplexer betrachtet werden.

Denkbar ist auch, dass die Hubplattform 14 mehrere Förderobjekte gleichzeitig aufnehmen kann. Eine logische Darstellung eines Regalbediengeräts 10 mit einer zwei Förderobjekte aufnehmenden Hubplattform 14 ist in der Fig. 10 dargestellt. Jeder der Stellplätze bildet dabei einen logischen Knoten K1, K2. Im konkreten Beispiel wird angenommen, dass die Förderobjekte nach rechts abtransportiert werden. Dies bedeutet, dass das am Knoten K1 befindliche Objekt erst abtransportiert werden kann, wenn das über den Knoten K2 transportierte Objekt die Hubplattform 14 verlassen hat. Aus diesem Grund wird der Ausgang des Knotens K1 als Eingang auf den Knoten K2 geführt. Selbstverständlich sind auch andere Anordnungen vorstellbar, bei denen die Förderobjekte gleichzeitig die Hubplattform 14 verlassen können und die Knoten K1, K2 demgemäß nicht in der dargestellten Weise verknüpft sind. Allgemein kann ein Regalbediengerät als v-zu-w-Multiplexer betrachtet werden, wobei v die Anzahl der vom Regalbediengerät 10 erreichten Lagerplätze Ll..Lv angibt und w die Anzahl der vom Regalbediengerät 10 gleichzeitig transportierten Objekte beziehungsweise die auf der Hubplattform 14 vorhandenen Stellplätze. Aus den Figuren 9 und 10 geht insbesondere auch hervor, dass die Fördersegmente generell auch als logische Fördersegmente gesehen werden können und nicht unbedingt rein physisch zu betrachten sind. Im Falle eines v-zu-1 Regalbediengeräts "existiert" zu einem Zeitpunkt ja stets nur ein eingehendes Fördersegment 1a, 1b.

Fig. 11 zeigt eine weitere beispielhafte Anordnung, umfassend ein Lager 9, einen neben dem Lager 9 angeordneten Lift 15 sowie mehrere auf den einzelnen Lagerebenen operierende, autonome Förderfahrzeuge 16 ("Shuttles"). Ein solches Shuttle 16 entnimmt ein Förderobjekt 17 von einem Lagerplatz L und transportiert es zum Lift 15. Dieser übernimmt das Objekt 17 und transportiert es zu einer weiterführenden Förderbahn (nicht dargestellt).

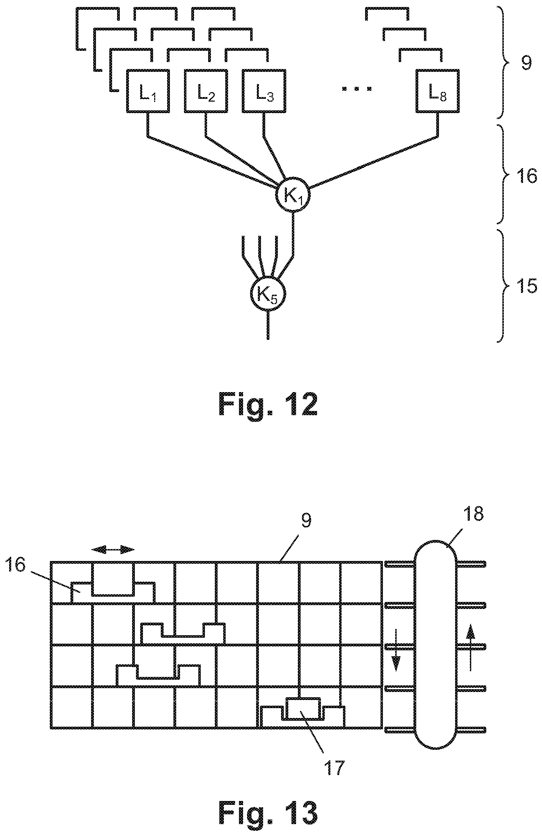

Die sich aus der Fig. 12 ergebende logische Struktur ist in der Fig. 13 dargestellt. Dabei bildet jedes Shuttle 16 einen Knoten K1..K4, auf welchen jeweils die Lagerplätze L1..L8 einer Lagerreihe geführt sind. Die von den Knoten K1..K4 abgehenden Fördersegmente 3 werden wiederum auf den Knoten K5 geführt, welcher den Lift 15 repräsentiert.

Fig. 13 zeigt eine weitere Anordnung mit einem Lager 9 und Shuttles 16, welche der in Fig. 11 gezeigten Anordnung sehr ähnlich ist. Im Unterschied dazu ist aber anstelle des Lifts 15 ein Paternoster 18 vorgesehen.

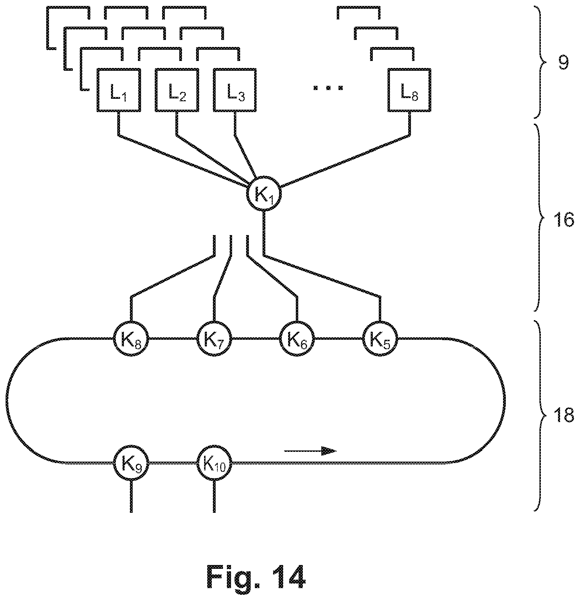

Fig. 14 zeigt wiederum eine logische Repräsentation der in Fig. 13 dargestellten Anordnung. Unter der Voraussetzung, dass der Paternoster 18 die Förderobjekte 17 im Kreis transportieren kann, wird dieser in der Fig. 14 als Schleife dargestellt, wobei die Knoten K5..K8 die Übergabepunkte in den einzelnen Ebenen des Lagers 9 und die Knoten K9 und K10 zwei Abzugsbahnen bilden, die (physisch) beispielsweise nebeneinander oder auch übereinander angeordnet sein können.

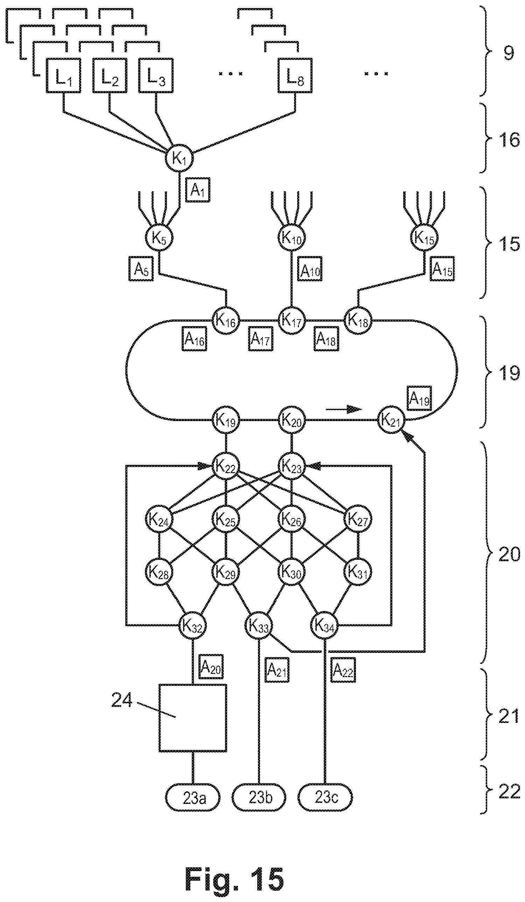

Fig. 15 zeigt abschließend ein etwas komplexeres Beispiel für eine Förderanlage. Wie auch schon in den Figuren 9, 10, 12 und 14 sind mehrere Fördertechnikelemente Ka..Kc derart miteinander gekoppelt, dass zumindest eine Ankopplung 2 für ein abgehendes Fördersegment 3 des einen Fördertechnikelements Ka..Kc mit einem eingehenden Fördersegment 1a, 1b eines anderen Fördertechnikelements Ka..Kc direkt oder indirekt verbunden ist. Dabei sind mehrere der mit einer ODER-Verknüpfung logisch verknüpften Auslöseeinrichtungen A jeweils einem anderen stromabwärts gelegenen Fördertechnikelement Ka..Kc der genannten Art nachgelagert. Wie auch schon in den Figuren 9, 10, 12 und 14 sind die Fördertechnikelemente respektive Knoten K1..K34 lediglich vereinfacht dargestellt.

"Direkt" bedeutet in obigem Zusammenhang, dass die Ankopplung 2 für ein abgehendes Fördersegment 3 des einen Fördertechnikelements Ka..Kc ohne Zwischenschaltung anderer Elemente mit einem eingehenden Fördersegment 1a, 1b eines anderen Fördertechnikelements Ka..Kc verbunden ist. Beispielsweise betrifft dies in der Fig. 15 die Knoten K5 und K16. "Indirekt" bedeutet, dass andere Elemente zwischengeschaltet sind, insbesondere Abzweiger und dergleichen. Beispielsweise ist die Verbindung der Knoten K16 und K24 indirekt, da K19 und K22 zwischengeschaltet sind und als Auffächerung fungieren.

Konkret umfasst die in der Fig. 15 dargestellte Anordnung ein Lager 9, mehrere darin autonom operierende Shuttles 16 sowie an die Lager 9 angeschlossene Lifte 15. In diesem Beispiel weist das Lager 9 drei Regalreihen beziehungsweise Regalgassen auf, wobei jede Regalreihe 32 Lagerplätzte L aufweist, die in vier Ebenen zu je acht Plätzen angeordnet sind. Demgemäß bewegen sich in der ersten Regalreihe die durch die Knoten K1..K4 repräsentierten Shuttles 16, in der zweiten Regalreihe die durch die Knoten K6..K9 repräsentierten Shuttles 16 und in der dritten Regalreihe die durch die Knoten K1 1..K14 repräsentierten Shuttles 16. Die Lifte 15 sind durch die Knoten K5, K10 und K15 repräsentiert.

An die Lifte 15 schließt sich eine horizontale Schleife 19 an, in der die Knoten K16..K21 angeordnet sind. Der Pfeil bezeichnet dabei die Förderrichtung. Über die Knoten K19 und K20 werden Förderobjekte aus der Schleife 19 in ein Netz 20 übergeben, das mehrere miteinander vernetzte Knoten K22..K34 aufweist. An das Netz 20 schließt sich ein optionaler Sortierbereich 21 und an diesen ein Kommissionierbereich 22 an. Im Kommissionierbereich 22 befinden sich drei zu versorgende Ziele 23a..23c, beispielsweise Arbeitsplätze, an denen Förderobjekte 17 automatisch oder manuell in Versandbehälter oder auf Paletten geladen werden. In dem in Fig. 15 dargestellten Beispiel ist nur einem Ziel 23a eine Sortierstufe 24 vorgeschaltet. Denkbar wäre aber auch, dass allen Zielen 23a..23c je eine Sortierstufe 24 vorgeschaltet ist oder auch keinem. Schließlich sind in dem in Fig. 15 dargestellten Beispiel mehrere Auslöseeinrichtungen A1..A22 vorgesehen. Beispielsweise ist jedem Shuttle 16 eine Auslöseeinrichtung A1..A4, A6..A9 und A11..14 auf der Aufnahmeplattform zugeordnet. Jedem Lift 15 ist eine Auslöseeinrichtung A5, A10 und A15 auf der Hubplattform zugeordnet.

Es wird ausdrücklich darauf hingewiesen, dass die Anordnung der Auslöseeinrichtungen A1..A22 lediglich beispielhaft ist, um die Funktionsweise der in Fig. 15 dargestellten Förderanlage zu illustrieren und natürlich auch anders erfolgen kann. Insbesondere wird darauf hingewiesen, dass im Netz 20 der besseren Darstellbarkeit halber überhaupt keine Auslöseeinrichtungen eingezeichnet sind. In einer realen Anlage können natürlich auch im Netz 20 Auslöseeinrichtungen an beliebiger Stelle vorgesehen sein. Weiterhin wird darauf hingewiesen, dass die Vernetzung der Knoten K1..K34 mit den Auslöseeinrichtungen A1..A34 in der Fig. 15 ebenfalls nicht explizit dargestellt ist, in einer realen Umsetzung der Förderanlage selbstverständlich vorliegt.

Beispielsweise können an die Eingänge 6 des Fördertechnikelements K1 die Auslöseeinrichtungen A5 und A16 angeschlossen sein. An das Fördertechnikelement K21 können zum Beispiel die Auslöseeinrichtungen A16..A19 angeschlossen sein. Das Fördertechnikelement K24 kann an nicht dargestellte Auslöseeinrichtungen im Netz 20 angeschlossen sein und so weiter. Physisch kann die Verbindung der Auslöseeinrichtungen A1..A22 mit den Knoten K1..K34 drahtgebunden oder drahtlos erfolgen. Beispielsweise können die Auslöseeinrichtungen A1..A22 über ein Bussystem mit den Knoten K1..K34 verbunden sein. Das Verbinden einer Auslöseeinrichtung A1..A22 mit einem Knoten K1..K34 erfolgt dann beispielsweise dadurch, dass in einem Speicher des Knotens K1..K34 die Adresse der betreffenden Auslöseeinrichtung A1..A22 derart gespeichert beziehungsweise markiert wird, dass diese für die ODER-Verknüpfung heranzuziehen ist. Auf dieselbe Weise kann die Verbindung in einem drahtlosen Netz erfolgen.

In dem in Fig. 15 gezeigten Beispiel sind mehrere Fördertechnikelemente/Knoten K1..K34 direkt oder indirekt ringförmig miteinander verbunden. Dementsprechend wird wenigstens ein Teilförderstrom ringförmig über die genannten Fördertechnikelemente/Knoten K1..K34 geführt. Mit anderen Worten wird eine Rückkopplung vorgesehen. Beispielsweise ist der Knoten K21 mit dem Knoten K18, der Knoten K32 mit dem Knoten K22, der Knoten K34 mit dem Knoten K23 sowie der Knoten K33 mit dem Knoten K21 ringförmig verbunden. Auf diese Weise kann der Ordnungsgrad der transportierten Förderobjekte 17 in mehreren Durchläufen erhöht werden, beziehungsweise können Lücken in der Reihenfolge schrittweise aufgefüllt werden. Die Begriffe "stromabwärts" und "stromaufwärts" können in Bezug auf einen solchen ringförmigen Teilstrom synonymisch gebraucht werden. Selbstverständlich sind die in der Fig. 15 dargestellten Rückkopplungen rein beispielhaft und dienen der besseren Illustration der Möglichkeiten. Andere ringförmige Verbindungen sind natürlich gleichermaßen vorstellbar.

In der Fig. 15 sind weiterhin einige Auffächerungen des Förderstroms dargestellt, beispielsweise bei den Knoten K22..K31. Generell kann eine Auffächerung dazu dienen, einen abgehenden Förderstrom in verschiedene Bereiche einer Förderanlage beziehungsweise zu verschiedenen Zielen 23a..23c zu leiten. Dabei kann ein Knoten K22..K31 mit mehreren abgehenden Fördersegmenten 3 gedanklich auch in einen Knoten K22..K31 mit nur einem abgehenden Fördersegment 3 und nachgelagerten Knoten mit mehreren abgehenden Fördersegmenten 3 aufgeteilt werden.

Günstig ist es, wenn die den Fördertechnikelementen K1..K34 zugeordneten Verfahrensschritte im Hinblick auf die Steuerung der Anhalteeinrichtungen 4a, 4b - bis auf die Meldung eines eine Auslöseeinrichtung A1..A22 passierenden Förderobjekts 17 - je Fördertechnikelement K1..K34 unabhängig von den Verfahrensschritten der übrigen Fördertechnikelemente K1..K34 ausgeführt werden. Dadurch kann die Kommunikation und damit der Aufwand für Kommunikationsleitungen zwischen den Fördertechnikelementen K1..K34 gering gehalten werden.

In diesem Zusammenhang ist es auch von Vorteil, wenn eine Programmlogik im Hinblick auf die Steuerung der Anhalteeinrichtungen 4a, 4b in allen Fördertechnikelementen K1..K34 identisch aufgebaut ist, beziehungsweise wenn die Verfahrensschritte im Hinblick auf die Steuerung der Anhalteeinrichtungen 4a, 4b in allen Fördertechnikelementen K1..K34 in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Generell können innerhalb einer Förderanlage auch Fördertechnikelemente K1..K34 mit unterschiedlicher Freigabestrategie verwendet werden. Beispielsweise können die Fördertechnikelemente K1..K15 dazu eingerichtet sein, ein Förderobjekt n freizugeben, wenn eines der vorangehenden Förderobjekte n-1 oder n-2 eine der ODER-verknüpften Auslöseeinrichtungen A1..A22 passiert, wohingegen die übrigen Fördertechnikelemente K16..K34 beispielsweise dazu eingerichtet sein können, ein Förderobjekt n nur dann freizugeben, wenn das vorangehenden Förderobjekt n-1 eine der ODER-verknüpften Auslöseeinrichtungen A1..A22 passiert. Auf diese Weise können neuralgische Punkte einer Förderanlage dahingehend entschärft werden, als dort die Sortierkriterien hinsichtlich eines verbesserten Durchsatzes gelockert werden. Gegebenenfalls können die Vorgaben zur Freigabe eines Förderobjekts 17 im Betrieb auch dynamisch angepasst werden, beispielsweise von einer übergeordneten Steuerung.

Zur Bildung einer vorgegebenen Sortierreihenfolge ist es auch von Vorteil, wenn Förderobjekte 17 im Hinblick auf die Ziele 23a..23c und in Bezug auf eine Sortierreihenfolge für ein zu versorgendes Ziel 23a..23c geordnet ausgelagert werden. Das bedeutet, dass zuerst Förderobjekte 17 für das Ziel 23a..23c mit der niedrigsten Position in einer Reihenfolge ausgelagert werden, dann die Förderobjekte 17 mit der zweitniedrigsten Position usw. Zudem werden die Förderobjekte für ein bestimmtes Ziel 23a..23c ebenfalls geordnet ausgelagert. Befinden sich in der Regalreihe des Lagers 9, aus dem mit den Fördertechnikelementen K1..K4 ausgelagert wird, zum Beispiel die Förderobjekte Nummer 3 und Nummer 5 des Ziels 23a und die Förderobjekte 1 und 7 des Ziels 23b, so werden die Förderobjekte in der Reihenfolge a3, a5, b1, b7 ausgelagert. Bei diesem Beispiel wird angenommen, dass sich die in der Reihenfolge fehlenden Förderobjekte 17 (also z.B. a1, a2, a4, b2, b3, usw.) in anderen Regalreihen befinden, die von anderen Fördertechnikelementen K6..K9, K11..K14 ausgelagert werden. Auf diese Weise kann insgesamt ein hoher Ordnungsgrad des auf der Fördertechnik vorhandenen Förderströme erzielt werden.

Alternativ wäre auch vorstellbar, dass die Förderobjekte 17 in Bezug auf eine Sortierreihenfolge für ein zu versorgendes Ziel 23a..23c geordnet, im Hinblick auf die Ziele 23a..23c jedoch chaotisch beziehungsweise ungeordnet aus dem Lager 9 ausgelagert werden. Bezogen auf das zuvor genannten Beispiel bedeutet dies, dass die Förderobjekte 17 beispielsweise auch in der Reihenfolge b1, a3, a5, b7 oder beispielsweise auch in der Reihenfolge b1, a3, b7, a5 ausgelagert werden können. Durch die ungeordnete Auslagerung auf Zielebene kann der Durchsatz bei der Auslagerung erhöht werden, beispielsweise wenn bei der Auslagerung Transportwege der Fördertechnikelemente K1..K15 minimiert werden.

Gegebenenfalls können die Förderobjekte 17 vor Erreichen eines Ziels 23a..23c noch eine Sortierstufe 24 durchlaufen, um eine exakte Ist-Reihenfolge zu erreichen, so wie dies in der Fig. 15 für das Ziel 23a vorgesehen ist. Durch die Vorsortierung kann diese Sortierstufe 24 jedoch klein gehalten werden und benötigt daher nur wenig Bauraum.

Um Blockaden auf der Förderanlage zu erkennen beziehungsweise um diese zu beheben, kann in einer vorteilhaften Ausführungsform auch vorgesehen sein, dass die Freigaben der Knoten K1..K34 pro Zeiteinheit von einer übergeordneten Steuerung überwacht werden und jene Anhalteeinrichtung 4a, 4b freigegeben wird, an welcher das Förderobjekt 17 mit der niedrigsten Ordnungsnummer wartet, wenn für die Freigaben pro Zeiteinheit ein Schwellwert unterschritten wird.

Sinkt beispielsweise der Wert für die Freigaben pro Zeiteinheit von einem relativ konstanten Wert (z.B. 50 Freigaben pro Minute) auf einen sehr niedrigen Wert oder sogar Null, so kann davon ausgegangen werden, dass auf der Förderanlage eine Blockade vorliegt. Durch ein übergeordnetes Eingreifen kann diese Blockade wieder aufgelöst werden. Anstelle das Förderobjekt 17 mit der niedrigsten Ordnungsnummer freizugeben, kann eine Freigabe beispielsweise auch zufällig erfolgen.

Vorteilhaft ist es auch, wenn der Schwellwert entsprechend der Anzahl der auf der Förderanlage befindlichen Objekte 17 adaptiert wird. Das heißt, dass der Schwellwert erhöht wird, wenn die Anzahl der transportierten Objekte 17 steigt und umgekehrt. Damit wird vermieden, dass eine sinkende Anzahl von Freigaben, welche durch eine geringe Anzahl an transportierten Förderobjekten 17 begründet ist, als Blockade fehlinterpretiert wird.

Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte 17 auf der Förderanlage weil sie eben zur Mehrzahl noch im Lager 9 oder bereits in Versandbehälter verladen sind. Vorteilhaft ist es auch, wenn ein Pausieren der Entnahme der Förderobjekte 17 an einem Ziel 23a..23c.berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

In diesem Zusammenhang ist es auch zweckmäßig, wenn die Auslagerung von Förderobjekten 17 aus dem Lager 9 entsprechend der Entnahme der Förderobjekte 17 am Ziel 23a..23c angepasst wird. Das heißt, dass die Anzahl der pro Zeiteinheit aus dem Lager 9 entnommenen Förderobjekte 17 gesenkt wird, wenn die Anzahl der pro Zeiteinheit am Ziel 23a..23c entnommenen Förderobjekte 17 sinkt und umgekehrt.

Die Ausführungsbeispiele zeigen mögliche Ausführungsvarianten eines erfindungsgemäßen Fördertechnikelements Ka..Kc, K1..K34 respektive einer erfindungsgemäßen Förderanlage, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die dargestellten Vorrichtungen in der Realität auch mehr Bestandteile als dargestellt umfassen können.

Der Ordnung halber sei abschließend darauf hingewiesen, dass zum besseren Verständnis des Aufbaus eines Fördertechnikelements Ka..Kc, K1..K34 respektive einer erfindungsgemäßen Förderanlage dieses/diese bzw. dessen/deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1a, 1b: eingehendes Fördersegment
- 2: Ankopplung für abgehendes Fördersegment
- 3: abgehendes Fördersegment
- 4a, 4b: Anhalteeinrichtung
- 5, 5a, 5b: Steuerung

- 6, 6a, 6b: Eingang
- 7: Sensor / Leseeinrichtung
- 8: Ausgangsleitung
- 9: Lager
- 10: Regalbediengerät

- 11: Schienen
- 12: Wagen
- 13: Mast
- 14: Hubplattform
- 15: Lift

- 16: Förderfahrzeug ("Shuttle")
- 17: Förderobjekt
- 18: Paternoster
- 19: Schleife
- 20: Netz

- 21: Sortierbereich
- 22: Kommissionierbereich
- 23a..23c: Ziel
- 24: Sortierstufe

- A, A1..A22: Auslöseeinrichtung
- Ka..Kc, K1..K34: Fördertechnikelement / Knoten
- L, L1..L8: Lagerplatz

## Patentansprüche

1. Verfahren zum Bilden einer Sortierreihenfolge für ein zu versorgendes Ziel (23a..23c) oder mehrerer solcher Reihenfolgen für mehrere zu versorgende Ziele (23a..23c) in einer Förderanlage mit mehreren Fördertechnikelementen (Ka..Kc, K1..K34) zum Bündeln von Förderströmen, die jeweils mehrere eingehende Fördersegmente (1a, 1b), zumindest eine Ankopplung (2) an ein abgehendes Fördersegment (3), auf das die eingehenden Fördersegmente (1a, 1b) zusammengeführt werden, und mehrere Anhalteeinrichtungen (4a, 4b) zum Anhalten eines Förderflusses auf den eingehenden Fördersegmenten (1a, 1b) umfassen, wobei die zumindest eine Ankopplung (2) für ein abgehendes Fördersegment (3) des einen Fördertechnikelements (Ka..Kc, K1..K34) mit einem eingehenden Fördersegment (1a, 1b) eines anderen Fördertechnikelements (Ka..Kc, K1..K34) direkt oder indirekt verbunden ist,
**dadurch gekennzeichnet, dass**
- mehrere zu den genannten eingehenden Fördersegmenten (1a, 1b) stromabwärts gelegene und mit einer ODER-Verknüpfung logisch verknüpfte Auslöseeinrichtungen (A, A1..A22) für die Freigabe einer Anhalteeinrichtung (4a, 4b) beziehungsweise eines Förderobjekts (17) herangezogen werden und eine Anhalteeinrichtung (4a, 4b) beziehungsweise ein an dieser wartendes Förderobjekt (17) freigegeben wird, wenn ein dem wartenden Förderobjekt (17) in einer Sortierreihenfolge vorangehendes Förderobjekt (17) eine der verknüpften Auslöseeinrichtungen (A, A1..A22) passiert oder es kein vorangehendes Förderobjekt (17) gibt und
- mehrere der mit einer ODER-Verknüpfung logisch verknüpften Auslöseeinrichtungen (A, A1..A22) jeweils einem anderen stromabwärts gelegenen Fördertechnikelement (Ka..Kc, K1..K34) der genannten Art nachgelagert sind.

2. Verfahren nach Anspruch 1, **dadurch gekennzeichnet, dass** die Anhalteeinrichtung (4a, 4b) beziehungsweise das an dieser wartende Förderobjekt (17) freigegeben wird, wenn ein dem genannten Förderobjekt (17) in einer Sortierreihenfolge unmittelbar vorangehendes Förderobjekt (17) eine der verknüpften Auslöseeinrichtungen (A, A1..A22) passiert.

3. Verfahren nach Anspruch 2, **dadurch gekennzeichnet, dass** eine Anhalteeinrichtung (4a, 4b) beziehungsweise ein an dieser wartendes Förderobjekt (17) freigegeben wird, wenn alle dem wartenden Förderobjekt (17) in einer Sortierreihenfolge vorangehenden Förderobjekte (17) eine der verknüpften Auslöseeinrichtungen (A, A1..A22) passiert haben.

4. Verfahren nach einem der Ansprüche 1 bis 3, **dadurch gekennzeichnet, dass** auch das Signal einer direkt in einem abgehenden Fördersegment (3) angeordneten Auslöseeinrichtung (A, A1..A22) für die Freigabe der Anhalteeinrichtung (4a, 4b) beziehungsweise des an dieser wartenden Förderobjekts (17) herangezogen wird.

5. Verfahren nach einem der Ansprüche 1 bis 4, **dadurch gekennzeichnet, dass** mehrere Förderobjekte (17) eine gleiche Ordnungsnummer in der Sortierreihenfolge aufweisen.

6. Verfahren nach einem der Ansprüche 1 bis 5, **dadurch gekennzeichnet, dass** die den Fördertechnikelementen (Ka..Kc, K1..K34) zugeordneten Verfahrensschritte im Hinblick auf die Steuerung der Anhalteeinrichtungen (4a, 4b) - bis auf die Meldung eines eine Auslöseeinrichtung (A, A1..A22) passierenden Förderobjekts (17) - je Fördertechnikelement (Ka..Kc, K1..K34) unabhängig von den Verfahrensschritten der übrigen Fördertechnikelemente (Ka..Kc, K1..K34) ausgeführt werden.

7. Verfahren nach Anspruch 6, **dadurch gekennzeichnet, dass** die Verfahrensschritte im Hinblick auf die Steuerung der Anhalteeinrichtungen (4a, 4b) in allen Fördertechnikelementen (Ka..Kc, K1..K34) in identischer Weise ausgeführt werden.

8. Verfahren nach einem der Ansprüche 1 bis 7 zum Betrieb einer Förderanlage der genannten Art mit einem vorgelagerten Lager (9) mit Lagerplätzen (L, L1..L8), **dadurch gekennzeichnet, dass** das Fördertechnikelement (Ka..Kc, K1..K34) als Auslagerungsroboter (10, 16) für das Lager (9) ausgebildet ist.

9. Verfahren nach Anspruch 8 zum Betrieb einer Förderanlage der genannten Art mit einem vorgelagerten Lager (9) mit Lagerplätzen (L, L1..L8) für Förderobjekte (17), **dadurch gekennzeichnet, dass** Förderobjekte (17) im Hinblick auf die Ziele (23a..23c) und in Bezug auf eine Sortierreihenfolge für ein zu versorgendes Ziel (23a..23c) geordnet ausgelagert werden.

10. Verfahren nach Anspruch 8 zum Betrieb einer Förderanlage der genannten Art mit einem vorgelagerten Lager (9) mit Lagerplätzen (L, L1..L8) für Förderobjekte (17), **dadurch gekennzeichnet, dass** Förderobjekte (17) in Bezug auf eine Sortierreihenfolge für ein zu versorgendes Ziel (23a..23c) geordnet, im Hinblick auf die Ziele (23a..23c) jedoch chaotisch beziehungsweise ungeordnet aus dem Lager (9) ausgelagert werden.

11. Verfahren nach einem der Ansprüche 1 bis 10, **dadurch gekennzeichnet, dass** wenigstens ein Teilförderstrom ringförmig über die genannten Fördertechnikelemente (Ka..Kc, K1..K34) geführt wird.

12. Verfahren nach einem der Ansprüche 1 bis 11, **dadurch gekennzeichnet, dass** der Förderstrom nach der Ankopplung (2) für das abgehende Fördersegment (3) wieder aufgefächert wird.

13. Verfahren nach einem der Ansprüche 1 bis 12, **dadurch gekennzeichnet, dass** die Freigaben pro Zeiteinheit von einer übergeordneten Steuerung überwacht werden und jene Anhalteeinrichtung (4a, 4b) freigegeben wird, an welcher das Förderobjekt (17) mit der niedrigsten Ordnungsnummer wartet, wenn für die Freigaben pro Zeiteinheit ein Schwellwert unterschritten wird.

14. Förderanlage mit mehreren Fördertechnikelementen (Ka..Kc, K1..K34) zum Bündeln von Förderströmen, jeweils umfassend
- mehrere eingehende Fördersegmente (1a, 1b),
- zumindest eine Ankopplung (2) für ein abgehendes Fördersegment (3), auf das die eingehenden Fördersegmente (1a, 1b) zusammengeführt werden, und
- mehrere Anhalteeinrichtungen (4a, 4b) zum Anhalten eines Förderflusses auf den eingehenden Fördersegmenten (1a, 1b), wobei
- zumindest eine Ankopplung (2) für ein abgehendes Fördersegment (3) des einen Fördertechnikelements (Ka..Kc, K1..K34) mit einem eingehenden Fördersegment (1a, 1b) eines anderen Fördertechnikelements (Ka..Kc, K1..K34) direkt oder indirekt verbunden ist. **gekennzeichnet durch**
- mehrere zu den genannten eingehenden Fördersegmenten (1a, 1b) stromabwärts gelegene Auslöseeinrichtungen (A, A1..A22) und
- eine Steuerung (5) welche mehrere mit einer ODER-Verknüpfung logisch verknüpfte Eingänge (6) aufweist und eingangsseitig mit den genannten Auslöseeinrichtungen (A, A1..A22) und ausgangsseitig mit den genannten Anhalteeinrichtungen (4a, 4b) verbunden ist, wobei die Steuerung (5) dazu eingerichtet ist, eine Anhalteeinrichtung (4a, 4b) beziehungsweise ein an dieser wartendes Förderobjekt (17) freizugeben, wenn ein dem genannten Förderobjekt (17) in einer Sortierreihenfolge vorangehendes Förderobjekt (17) eine der genannten Auslöseeinrichtung (A, A1..A22) passiert oder es kein vorangehendes Förderobjekt (17) gibt.

15. Förderanlage nach Anspruch 14, **dadurch gekennzeichnet, dass** eine Programmlogik im Hinblick auf die Steuerung der Anhalteeinrichtungen (4a, 4b) in allen Fördertechnikelementen (Ka..Kc, K1..K34) identisch aufgebaut ist.

16. Förderanlage nach Anspruch 14 oder 15 **dadurch gekennzeichnet, dass** wenigstens zwei Fördertechnikelemente (Ka..Kc, K1..K34) direkt oder indirekt ringförmig miteinander verbunden sind.

## Claims

1. A method for creating a sorting sequence for a destination (23a..23c) to be supplied or multiple such sequences for multiple destinations (23a..23c) to be supplied in a conveyor system having a number of conveying elements (Ka..Kc, K1..K34)) for merging conveyor streams, each comprising a number of ingoing conveyor segments (1a, 1b), at least one coupling (2) to an outgoing conveyor segment (3) on which the ingoing conveyor segments (1a, 1b) are merged, and a number of retaining devices (4a, 4b) for retaining a conveyor flow on the ingoing conveyor segments (1a, 1b), wherein the at least one coupling (2) for an outgoing conveyor segment (3) of the one conveying element (Ka..Kc, K1..K34) is directly or indirectly connected to an ingoing conveyor segment (1a, 1b) of another conveying element (Ka..Kc, K1..K34),
**characterized in that**
- a number of logically OR-connected release devices (A, A1..A22) disposed downstream of said ingoing conveyor segments (1a, 1b) are provided for releasing a retaining device (4a, 4b) and/or a conveyed object (17), and a retaining device (4a, 4b) and/or a conveyed object (17) waiting at the retaining device (4a, 4b) is released when a conveyed object (17) preceding the waiting conveyed object (17) in a sorting sequence passes one of the connected release devices (A, A1..A22) or when there is no preceding conveyed object (17), and
- a number of the logically OR-connected release devices (A, A1..A22) are each connected downstream of another downstream conveying element (Ka..Kc, K1..K34) of said type.

2. The method according to claim 1, **characterized in that** the retaining device (4a, 4b) and/or the conveyed object (17) waiting at the retaining device (4a, 4b) is released when a conveyed object (17) directly preceding said conveyed object (17) in a sorting sequence passes one of the connected release devices (A, A1..A22).

3. The method according to claim 2, **characterized in that** a retaining device (4a, 4b) and/or a conveyed object (17) waiting at the retaining device (4a, 4b) is released when all conveyed objects (17) preceding the waiting conveyed object (17) in a sorting sequence have passed one of the connected release devices (A, A1..A22).

4. The method according to one of claims 1 to 3, **characterized in that** the signal of a release device (A, A1..A22) disposed directly in an outgoing conveyor segment (3) is also used to release the retaining device (4a, 4b) and/or the conveyed object (17) waiting at the retaining device (4a, 4b).

5. The method according to one of claims 1 to 4, **characterized in that** multiple conveyed objects (17) have the same sequence number in the sorting sequence.

6. The method according to one of claims 1 to 5, **characterized in that** the method steps assigned to the conveying elements (Ka..Kc, K1..K34) with regards to controlling the retaining devices (4a, 4b) - with the exception of reporting a conveyed object (17) passing a release device (A, A1..A22) - are implemented for each conveying element (Ka..Kc, K1..K34) independently of the method steps of the other conveying elements (Ka..Kc, K1..K34).

7. The method according to claim 6, **characterized in that** the method steps with regards to controlling the retaining devices (4a, 4b) are implemented in an identical manner in all conveying elements (Ka..Kc, K1..K34).

8. The method according to one of claims 1 to 7 for operating a conveyor system of the aforementioned kind with an upstream storage (9) with storage places (L, L1..L8), **characterized in that** the conveying element (Ka..Kc, K1..K34) is designed as a retrieving robot (10, 16) for the storage (9).

9. The method according to claim 8 for operating a conveyor system of the aforementioned kind with an upstream storage (9) with storage places (L, L1..L8) for conveyed objects (17), **characterized in that** conveyed objects (17) are retrieved in order on the basis of destinations (23a..23c) and with reference to a sorting sequence for a destination (23a..23c) to be supplied.

10. The method according to claim 8 for operating a conveyor system of the aforementioned kind with an upstream storage (9) with storage places (L, L1..L8) for conveyed objects (17), **characterized in that** conveyed objects (17) are placed in sequence on the basis of a sorting sequence for a destination (23a..23c) to be supplied but are retrieved from the storage (9) chaotically and/or not in sequence with regards to destinations (23a..23c).

11. The method according to one of claims 1 to 10, **characterized in that** at least one partial conveyor stream is directed circularly via said conveying elements (Ka..Kc, K1..K34).

12. The method according to one of claims 1 to 11, **characterized in that** the conveyor stream is fanned out again after the coupling (2) for the outgoing conveyor segment (3).

13. The method according to one of claims 1 to 12, **characterized in that** the releases per unit of time are monitored by a superordinate controller and the particular retaining device (4a, 4b) is released, at which the conveyed object (17) with the lowest sequence number is waiting, if the releases per unit of time is drop below a threshold value.

14. A conveyor system with a number of conveying elements (Ka..Kc, K1..K34) for merging conveyor streams, each comprising
- a number of ingoing conveyor segments (1a, 1b),
- at least one coupling (2) for an outgoing conveyor segment (3), on which the ingoing conveyor segments (1a, 1b) are merged, and
- a number of retaining devices (4a, 4b) on the ingoing conveyor segments (1a, 1b) for retaining a conveyor flow, wherein
- at least one coupling (2) for an outgoing conveyor segment (3) of the one conveying element (Ka..Kc, K1..K34) is directly or indirectly connected to an ingoing conveyor segment (1a, 1b) of another conveying element (Ka..Kc, K1..K34),
**characterized by**
- a number of release devices (A, A1..A22) disposed downstream of said ingoing conveyor segments (1a, 1b), and
- a controller (5) having a number of logically OR-connected inputs (6) and being connected to said release devices (A, A1..A22) on the input side and to retaining devices (4a, 4b) on the output side, wherein the controller (5) is configured to release a retaining device (4a, 4b) and/or a conveyed object (17) waiting at the retaining device (4a, 4b) when a conveyed object (17) preceding said conveyed object (17) in a sorting sequence passes one of said release device (A, A1..A22) or when there is no preceding conveyed object (17).

15. The conveyor system according to claim 14, **characterized in that** a program logic with regards to controlling the retaining devices (4a, 4b) is implemented in an identical manner in all conveying elements (Ka..Kc, K1..K34).

16. The conveyor system according to claim 14 or 15, **characterized in that** at least two conveying elements (Ka..Kc, K1..K34) are directly or indirectly circularly connected to one another.

## Revendications

1. Procédé pour la formation d'une séquence de tri pour une cible (23a...23c) à alimenter ou de plusieurs séquences similaires pour plusieurs cibles (23a...23c) à alimenter dans une installation de transport avec plusieurs éléments de manutention (Ka...Kc, K1...K34) pour la concentration de flux de transport, qui comprennent chacun des segments de transports entrants (1a, 1b), au moins un couplage (2) à un segment de transport sortant (3), sur lequel les segments de transport entrants (1a, 1b) sont regroupés, et plusieurs dispositifs d'arrêt (4a, 4b) pour l'arrêt d'un flux de transport sur les segments de transport entrants (1a, 1b), dans lequel l'au moins un couplage (2) pour un segment de transport sortant (3) d'un élément de manutention (Ka...Kc, K1...K34) est relié directement ou indirectement avec un segment de transport entrant (1a, 1b) d'un autre élément de manutention (Ka...Kc, K1...K34),
**caractérisé en ce que**
- plusieurs dispositifs de déclenchement (A, A1...A22) disposés en aval des segments de transport entrants (1a, 1b) et combinés de manière logique avec une combinaison OU sont utilisés pour la libération d'un dispositif d'arrêt (4a, 4b) respectivement d'un objet à transporter (17) et un dispositif d'arrêt (4a, 4b) respectivement un objet à transporter (17) en attente au niveau de celui-ci est libéré lorsqu'un objet à transporter (17) précédant l'objet à transporter (17) en attente dans une séquence de tri franchit un des dispositifs de déclenchement (A, A1...A22) combinés ou lorsqu'il n'y a aucun objet à transporter (17) précédent et
- plusieurs des dispositifs de déclenchement (A, A1...A22) combinés de manière logique avec une combinaison OU sont disposés chacun après un autre élément de manutention (Ka...Kc, K1...K34) du type mentionné, disposé en aval.

2. Procédé selon la revendication 1, **caractérisé en ce que** le dispositif d'arrêt (4a, 4b) respectivement l'objet à transporter (17) en attente au niveau de celui-ci est libéré lorsqu'un objet à transporter (17) précédant directement l'objet à transporter (17) mentionné dans une séquence de tri franchit un des dispositifs de déclenchement (A, A1...A22) combinés.

3. Procédé selon la revendication 2, **caractérisé en ce qu'**un dispositif d'arrêt (4a, 4b) respectivement un objet à transporter (17) en attente au niveau de celui-ci est libéré lorsque tous les objets à transporter (17) précédant l'objet à transporter (17) en attente dans une séquence de tri ont franchi un des dispositifs de déclenchement (A, A1...A22) combinés.

4. Procédé selon l'une des revendications 1 à 3, **caractérisé en ce que** le signal d'un dispositif de déclenchement (A, A1...A22) disposé directement dans segment de transport sortant (3) est utilisé pour la libération du dispositif d'arrêt (4a, 4b) respectivement de l'objet à transporter (17) en attente au niveau de celui-ci.

5. Procédé selon l'une des revendications 1 à 4, **caractérisé en ce que** plusieurs objets à transporter (17) présentent un même numéro d'ordre dans la séquence de tri.

6. Procédé selon l'une des revendications 1 à 5, **caractérisé en ce que** les étapes de procédé correspondant aux éléments de manutention (Ka...Kc, K1...K34) sont exécutées, pour chaque élément de manutention (Ka...Kc, K1...K34), indépendamment des étapes de procédé des autres éléments de manutention (Ka...Kc, K1...K34) en ce qui concerne le contrôle des dispositifs d'arrêt (4a, 4b) - à l'exception du message d'un objet à transporter (17) franchissant un dispositif de déclenchement (A, A1...A22).

7. Procédé selon la revendication 6, **caractérisé en ce que** les étapes de procédé sont exécutées de manière identique en ce qui concerne le contrôle des dispositifs d'arrêt (4a, 4b) dans tous les éléments de manutention (Ka...Kc, K1...K34).

8. Procédé selon l'une des revendications 1 à 7, pour le fonctionnement d'une installation de transport du type mentionné avec un magasin en amont (9) avec des emplacements de stockage (L, L1...L8), **caractérisé en ce que** l'élément de manutention (Ka...Kc, K1...K34) est conçu comme un robot de déstockage (10, 16) pour le magasin (9).

9. Procédé selon la revendication 8, pour le fonctionnement d'une installation de transport du type mentionné avec un magasin en amont (9) avec des emplacements de stockage (L, L1...L8) pour des objets à transporter (17), **caractérisé en ce que** les objets à transporter (17) sont déstockés de manière ordonnée en ce qui concerne les cibles (23a...23c) et en fonction d'une séquence de tri pour une cible (23a...23c) à alimenter.

10. Procédé selon la revendication 8, pour le fonctionnement d'une installation de transport du type mentionné avec un magasin en amont (9) avec des emplacements de stockage (L, L1...L8) pour des objets à transporter (17), **caractérisé en ce que** les objets à transporter (17) sont déstockés hors du magasin (9) en fonction d'une séquence de tri pour une cible (23a...23c) à alimenter, mais de manière chaotique respectivement désordonnée en ce qui concerne les cibles (23a...23c).

11. Procédé selon l'une des revendications 1 à 10, **caractérisé en ce qu'**au moins un flux de transport partiel est guidé de manière annulaire par l'intermédiaire des éléments de manutention (Ka...Kc, K1...K34) mentionnés.

12. Procédé selon l'une des revendications 1 à 11, **caractérisé en ce qu'**au moins un flux de transport est à nouveau divisé après le couplage (2) pour le segment de transport sortant (3).

13. Procédé selon l'une des revendications 1 à 12, **caractérisé en ce que** les libérations par unité de temps sont surveillées par une commande principale et le dispositif d'arrêt (4a, 4b) au niveau duquel l'objet à transporter (17) avec le numéro d'ordre le plus petit est en attente est libéré lorsque, pour les libérations par unité de temps, on passe sous une valeur seuil.

14. Installation de transport avec plusieurs éléments de manutention (Ka... Kc, K1...K34) pour la concentration de flux de transport, comprenant chacun
- plusieurs segments de transport entrants (1a, 1b),
- au moins un couplage (2) pour un segment de transport sortant (3), sur lequel les segments de transport entrants (1a, 1b) sont regroupés et
- plusieurs dispositifs d'arrêt (4a, 4b) pour l'arrêt d'un flux de transport sur les segments de transport entrants (1a, 1b), dans lequel
- au moins un couplage (2) pour un segment de transport sortant (3) d'un élément de manutention (Ka...Kc, K1...K34) est relié directement ou indirectement avec un segment de transport entrant (1a, 1b) d'un autre élément de manutention (Ka...Kc, K1...K34), **caractérisé par**
- plusieurs dispositifs de déclenchement (A, A1...A22) disposés en aval des segments de transport entrants (1a, 1b) mentionnés et
- une commande (5) qui comprend plusieurs entrées (6) combinées de manière logique avec une combinaison OU et qui est reliée, côté entrée, avec les dispositifs de déclenchement (A, A1...A22) mentionnés et, côté sortie, avec les dispositifs d'arrêt (4a, 4b) mentionnés, dans lequel la commande (5) est conçue pour libérer un dispositif d'arrêt (4a, 4b) respectivement un objet à transporter (17) en attente au niveau de celui-ci lorsqu'un objet à transporter (17) précédant l'objet à transporter (17) mentionné dans une séquence de tri franchit un des dispositifs de déclenchement (A, A1...A22) combinés.

15. Installation de transport selon la revendication 14, **caractérisé en ce qu'**une logique de programme est structurée de manière identique en ce qui concerne le contrôle des dispositifs d'arrêt (4a, 4b) dans tous les éléments de manutention (Ka...Kc, K1...K34).

16. Installation de transport selon la revendication 14 ou 15, **caractérisé en ce qu'**au moins deux éléments de manutention (Ka...Kc, K1...K34) sont reliés directement ou indirectement de manière annulaire entre eux.
